# EUROPÄISCHE PATENTSCHRIFT

(11) **EP 2 300 254 B1**
(45) Veröffentlichungstag und Bekanntmachung des Hinweises auf die Patenterteilung: **29.02.2012**
(21) Anmeldenummer: 09780707.7
(22) Anmeldetag: 16.07.2009
(51) Int. Cl.: B60K 6/48, B60K 6/40, F16D 1/10

(54) **VORRICHTUNG ZUR MONTAGE EINES HYBRIDGETRIEBES AN EINER BRENNKRAFTMASCHINE**
DEVICE FOR MOUNTING A HYBRID TRANSMISSION ON AN INTERNAL COMBUSTION ENGINE
DISPOSITIF DE MONTAGE D'UNE TRANSMISSION HYBRIDE SUR UN MOTEUR À COMBUSTION INTERNE

(30) Priorität: 17.07.2008 DE 102008040491
(43) Veröffentlichungstag der Anmeldung: 30.03.2011
(73) Patentinhaber: ZF Friedrichshafen AG, 88038 Friedrichshafen (DE)
(72) Erfinder: HUNOLD, Bernard, 88046 Friedrichshafen (DE); BACHMANN, Max, 88339 Bad Waldsee (DE); BORNTRAEGER, Kai, 88085 Langenargen (DE); BUDACH, Rene, 88212 Ravensburg (DE)
(86) Internationale Anmeldenummer: PCT/EP2009/059149
(87) Internationale Veröffentlichungsnummer: WO 2010/007129

(56) Entgegenhaltungen:
- EP-A- 1 403 117
- FR-A- 2 871 110
- JP-A- 2005 001 586
- US-A1- 2003 106 729
- US-B1- 6 474 428
- US-B1- 6 585 066

## Beschreibung

Die Erfindung betrifft eine Vorrichtung zur Montage eines Hybridgetriebes, welches ein Getriebe und ein Hybridmodul umfasst, an einer Brennkraftmaschine nach dem Oberbegriff des Anspruchs 1.

Die Hauptkomponenten eines Antriebsstrangs eines Kraftfahrzeugs sind ein Antriebsaggregat und ein Getriebe. Ein Getriebe wandelt Drehmomente und Drehzahlen und setzt so das Zugkraftangebot des Antriebsaggregats um, so dass dieses an Rädern des Kraftfahrzeugs nutzbar gemacht werden kann.

Ein Antriebsstrang mit einem Hybridantrieb umfasst neben einem als Verbrennungsmotor bzw. Brennkraftmaschine ausgebildeten Antriebsaggregat weiterhin ein Hybridmodul mit einem zusätzlichen, als Elektromotor ausgebildeten Antriebsaggregat. Die Einheit aus Hybridmodul und Getriebe wird auch als Hybridgetriebe bezeichnet. Die Einheit aus Hybridmodul und Getriebe muss an der Brennkraftmaschine montiert werden, wozu eine Vorrichtung zur Montage des Hybridgetriebes an der Brennkraftmaschine zum Einsatz kommt.

Bei aus der Praxis bekannten Lösungen umfasst eine Vorrichtung zur Montage eines Hybridgetriebes an einer Brennkraftmaschine einen Torsionsdämpfer, um eine Getriebewelle des Hybridgetriebes an ein Schwungrad der Brennkraftmaschine zu koppeln. Dabei ist bei aus der Praxis bekannten Vorrichtungen der Torsionsdämpfer unmittelbar mit der Getriebewelle des Hybridgetriebes verbunden, wobei dann eine Nabe des Torsionsdämpfers auf der Getriebewelle des Hybridgetriebes geklemmt ist. Dann, wenn die Getriebewelle einen relativ großen Durchmesser aufweist, bereitet diese Verbindung zwischen dem Hybridgetriebe und der Brennkraftmaschine unter Verwendung von herkömmlichen Torsionsdämpfern Schwierigkeiten.

Die Merkmale des Oberbegriffes des Anspruchs 1 sind in der EP 1 403 117 offenbart.

Es besteht daher Bedarf an einer Vorrichtung zur Montage eines Hybridgetriebes an einer Brennkraftmaschine, mit welcher unter Verwendung von Standardtorsionsdämpfern auch dann eine einfache und platzsparende Montage des Hybridgetriebes an der Brennkraftmaschine möglich ist, wenn die Getriebewelle des Hybridgetriebes einen großen Durchmesser aufweist.

Hiervon ausgehend liegt der vorliegenden Erfindung das Problem zu Grunde eine neuartige Vorrichtung zur Montage eines Hybridgetriebes, welches ein Getriebe und ein Hybridmodul umfasst, an einer Brennkraftmaschine zu schaffen.

Dieses Problem wird durch eine Vorrichtung gemäß Anspruch 1 gelöst. Erfindungsgemäß ist der Torsionsdämpfer über ein Anschlusselement mit der Getriebewelle verbindbar, wobei das Anschlusselement einen ersten Abschnitt mit einem relativ kleinen Durchmesser aufweist, auf welchem eine Nabe des Torsionsdämpfers klemmbar ist, und wobei das Anschlusselement einen zweiten Abschnitt mit einem relativ großen Durchmesser aufweist, an welchem die Getriebewelle über eine Mitnahmeverzahnung angreift.

Bei der erfindungsgemäßen Vorrichtung zur Montage eines Hybridgetriebes an einer Brennkraftmaschine erfolgt die Kopplung des Torsionsdämpfers an der Getriebewelle nicht wie im Stand der Technik üblich unmittelbar, sondern vielmehr mittelbar über ein Anschlusselement. Das Anschlusselement weist einen ersten Abschnitt mit einem relativ kleinen Durchmesser auf, auf welchem die Nabe des Torsionsdämpfers geklemmt wird. Weiterhin weist das Anschlusselement einen zweiten Abschnitt mit einem relativ großen Durchmesser auf, an welchem die Getriebewelle über eine Mitnahmeverzahnung angebunden werden kann. Hierdurch ist es möglich, selbst dann, wenn die Getriebewelle einen großen Durchmesser aufweist, Standardtorsionsdämpfer zur Montage des Hybridgetriebes an der Brennkraftmaschine zu verwenden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einem Hybridmodul eines Hybridgetriebes zusammen mit einer erfindungsgemäßen Vorrichtung zur Montage eines Hybridgetriebes an einer Brennkraftmaschine; und

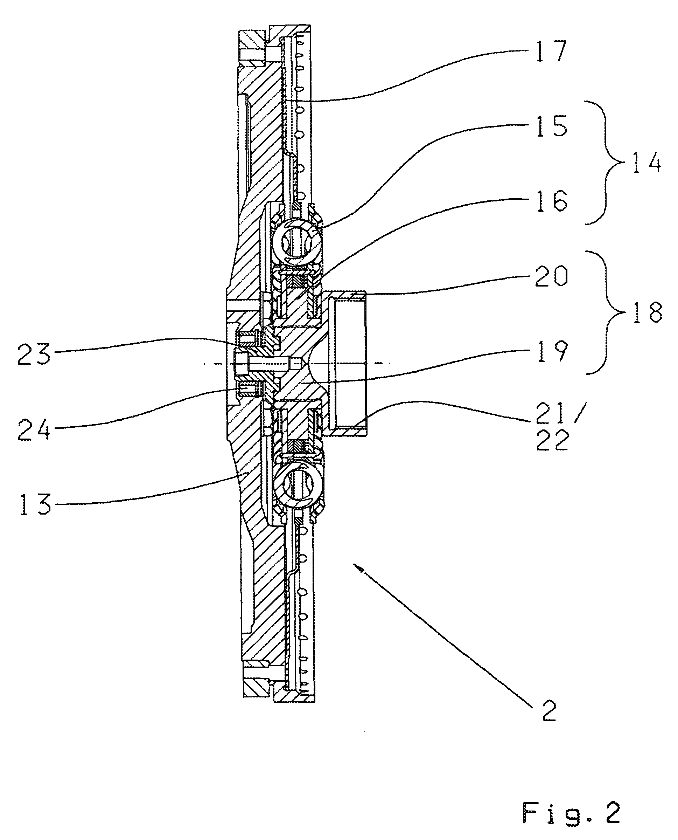

- Fig. 2: die erfindungsgemäße Vorrichtung zur Montage eines Hybridgetriebes an einer Brennkraftmaschine in Alleindarstellung.

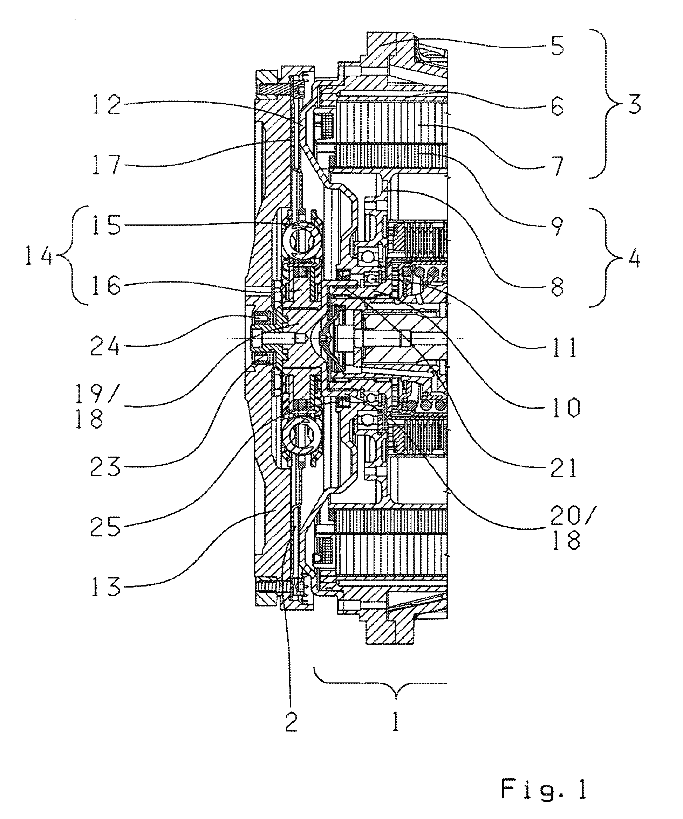

Fig. 1 zeigt einen Ausschnitt aus einem Hybridmodul 1 eines Hybridgetriebes zusammen mit einer erfindungsgemäßen Vorrichtung 2 zur Montage des Hybridgetriebes an einer Brennkraftmaschine. Das Hybridmodul 1 umfasst einen Elektromotor, wobei vom Elektromotor in Fig. 1 ein statorseitiger Ständer 4 und ein rotorseitiger Läufer 3 gezeigt sind.

Der statorseitige Ständer 4 umfasst ein Statorgehäuse 5, eine Statorbuchse 6 und ein Statorblechpaket 7. Der rotorseitige Läufer 4 umfasst einen Rotorgrundkörper 8 und ein Rotorblechpaket 9. Weiterhin umfasst das Hybridmodul 1 des Hybridgetriebes eine Getriebewelle 10, die über ein Lager 11 an einem Gehäuseabschnitt 12 des Hybridmoduls 1 radial gelagert ist.

Die erfindungsgemäße Vorrichtung 2 zur Montage des Hybridgetriebes über das Hybridmodul 1 an der Brennkraftmaschine, von welcher lediglich ein Schwungrad 13 dargestellt ist, umfasst einen Torsionsdämpfer 14, der eine Torsionsfeder 15 und eine Nabe 16 umfasst. Der Torsionsdämpfer 14 ist über ein als Anschlussmembran 17 ausgebildetes Anschlusselement mit dem Schwungrad 13 verbunden.

Erfindungsgemäß ist der Torsionsdämpfer 14 über ein Anschlusselement 18, welches als Reduzierstück ausgebildet ist, mittelbar mit der Getriebewelle 10 des Hybridmoduls 1 bzw. des Hybridgetriebes gekoppelt bzw. verbunden. Das als Reduzierstück ausgebildete Anschlusselement 18 verfügt dabei über einen ersten Abschnitt 19 mit einem relativ kleinen Durchmesser, auf welchem die Nabe 16 des Torsionsdämpfers 14 klemmbar ist. Weiterhin umfasst das als Reduzierstück ausgebildete Anschlusselement 18 einen zweiten Abschnitt 20, mit einem relativ großen Durchmesser, an welchem die Getriebewelle 10 über eine Mitnahmeverzahnung 21 zwischen dem Anschlusselement 18 und der Getriebewelle 10 angreift. Die Mitnahmeverzahnung 21 lässt dabei einen Axialausgleich zwischen dem Hybridmodul 1 des Hybridgetriebes und der Brennkraftmaschine zu.

Die Mitnahmeverzahnung 21 wird im gezeigten Ausführungsbeispiel dadurch gebildet, dass eine Außenverzahnung der Getriebewelle 10 in eine Innenverzahnung 22 des Anschlusselements 18 eingreift, wobei die Innenverzahnung 22 am zweiten Abschnitt 20 des als Reduzierstück ausgebildeten Anschlusselements 18 ausgebildet ist.

Zur Klemmung des Torsionsdämpfers 14, nämlich der Nabe 16 desselben, auf dem ersten Abschnitt 19 des Anschlusselements 18 dient ein Spannelement 23, welches über ein Lager 24 am Schwungrad 13 der Brennkraftmaschine radial gelagert ist. Das Lager 24, welches auch als Pilotlager bezeichnet werden kann, kann auch die Lagerung der Getriebewelle 10 übernehmen.

Die Mitnahmeverzahnung 21 zwischen dem Anschlusselement 18 und der Getriebewelle 10 ist ölgeschmiert, wobei gemäß Fig. 1 der zweite Abschnitt 20 des Anschlusselements 18 gegenüber dem Gehäuseabschnitt 12 über ein Dichtelement 25 abgedichtet ist, um einen Ölverlust nach außen zu vermeiden.

Die Montage des Hybridgetriebes am Schwungrad der Brennkraftmaschine erfolgt derart, dass zuerst die erfindungsgemäße Vorrichtung, nämlich der Torsionsdämpfer 14 derselben, vormontiert wird, nämlich einerseits am Schwungrad 13 über die Anschlussmembran 17 und andererseits über das Spannelement 23 am Abschnitt 19 des Anschlusselements 18, und dass anschließend die Kopplung des Hybridgetriebes an der Brennkraftmaschine dadurch erfolgt, dass die Getriebewelle 10 und das das Anschlusselement 18 über die Mitnahmeverzahnung 21 gekoppelt werden.

### Bezugszeichen

- 1: Hybridmodul
- 2: Vorrichtung
- 3: Läufer
- 4: Ständer
- 5: Statorgehäuse
- 6: Statorbuchse
- 7: Statorblechpaket
- 8: Rotorgrundkörper
- 9: Rotorblechpaket
- 10: Getriebewelle
- 11: Lager
- 12: Gehäuse
- 13: Schwungrad
- 14: Torsionsdämpfer
- 15: Torsionsfeder
- 16: Nabe
- 17: Anschlussmembran
- 18: Anschlusselement
- 19: erster Abschnitt
- 20: zweiter Abschnitt
- 21: Mitnahmeverzahnung
- 22: Innenverzahnung
- 23: Spannelement
- 24: Lager
- 25: Dichtelement

## Patentansprüche

1. Vorrichtung zur Montage eines Hybridgetriebes, welches ein Getriebe und ein Hybridmodul umfasst, an einer Brennkraftmaschine, nämlich zur Kopplung einer Getriebewelle des Hybridgetriebes an einem Schwungrad der Brennkraftmaschine mit Hilfe eines Torsionsdämpfers, dadurch gekennzeichn e t , dass der Torsionsdämpfer (14) über ein Anschlusselement (18) mit der Getriebewelle (10) verbindbar ist, wobei das Anschlusselement (18) einen ersten Abschnitt (19) mit einem relativ kleinen Durchmesser aufweist, auf welchem eine Nabe (16) des Torsionsdämpfers (14) geklemmt ist, und wobei das Anschlusselement (18) einen zweiten Abschnitt (20) mit einem relativ großen Durchmesser aufweist, an welchem die Getriebewelle (10) über eine Mitnahmeverzahnung (21) angreift.

2. Vorrichtung nach Anspruch 1, **dadurch gekennzeichnet, dass** das Anschlusselement (18) ein Reduzierstück ist.

3. Vorrichtung nach Anspruch 1 oder 2, **dadurch gekennzeichnet, dass** der zweite Abschnitt (20) des Anschlusselements (18) eine Innenverzahnung und die Getriebewelle (10) eine Außenverzahnung aufweist, die unter Ausbildung der Mitnahmeverzahnung (21) ineinander eingreifen.

4. Vorrichtung nach einem der Ansprüche 1 bis 3, **dadurch gekennzeichnet, dass** die Mitnahmeverzahnung (21) einen Axialausgleich zwischen dem Hybridmodul des Hybridgetriebes und der Brennkraftmaschine zulässt.

5. Vorrichtung nach einem der Ansprüche 1 bis 4, **dadurch gekennzeichnet, dass** die Mitnahmeverzahnung (21) ölgeschmiert ist.

6. Vorrichtung nach einem der Ansprüch1 bis 5, **dadurch gekennzeichnet, dass** der Torsionsdämpfer (14), nämlich die Nabe (16) desselben, am ersten Abschnitt (19) des Anschlusselements (20) über ein Spannelement (23) geklemmt ist.

7. Vorrichtung nach Anspruch 6, **dadurch gekennzeichnet, dass** das Spannelement (23) am Schwungrad der Brennkraftmaschine über ein Lager (24) gelagert ist.

8. Vorrichtung nach Anspruch 5, **dadurch gekennzeichnet, dass** der zweite Abschnitt (20) des Anschlusselements (18) gegenüber einem Gehäuseabschnitt (12) über ein Dichtelement (25) abgedichtet ist.

## Claims

1. Device for mounting a hybrid transmission, which comprises a transmission and a hybrid module, on an internal combustion engine, specifically for coupling a transmission shaft of the hybrid transmission to a flywheel of the internal combustion engine by means of a torsion damper, **characterized in that** the torsion damper (14) can be connected to the transmission shaft (10) via a connecting element (18), wherein the connecting element (18) has a first portion (19) which is of relatively small diameter and on which a hub (16) of the torsion damper (14) is clamped, and wherein the connecting element (18) has a second portion (20) which is of relatively large diameter and on which the transmission shaft (10) engages via a driving toothing (21).

2. Device according to Claim 1, **characterized in that** the connecting element (18) is a reduction piece.

3. Device according to Claim 1 or 2, **characterized in that** the second portion (20) of the connecting element (18) has an internal toothing and the transmission shaft (10) has an external toothing, which internal toothing and external toothing engage into one another so as to form the driving toothing (21).

4. Device according to one of Claims 1 to 3, **characterized in that** the driving toothing (21) permits axial compensation between the hybrid module of the hybrid transmission and the internal combustion engine.

5. Device according to one of Claims 1 to 4, **characterized in that** the driving toothing (21) is lubricated with oil.

6. Device according to one of Claims 1 to 5, **characterized in that** the torsion damper (14), specifically the hub (16) thereof, is clamped to the first portion (19) of the connecting element (18) by means of a clamping element (23).

7. Device according to Claim 6, **characterized in that** the clamping element (23) is mounted on the flywheel of the internal combustion engine via a bearing (24).

8. Device according to Claim 5, **characterized in that** the second portion (20) of the connecting element (18) is sealed off with respect to a housing portion (12) by means of a sealing element (25).

## Revendications

1. Dispositif de montage d'une transmission hybride, qui comprend une transmission et un module hybride, sur un moteur à combustion interne, à savoir pour l'accouplement d'un arbre de transmission de la transmission hybride à un volant d'inertie du moteur à combustion interne à l'aide d'un amortisseur de torsions, **caractérisé en ce que** l'amortisseur de torsions (14) peut être connecté par le biais d'un élément de raccordement (18) à l'arbre de transmission (10), l'élément de raccordement (18) présentant une première portion (19) de diamètre relativement petit, sur laquelle est serré un moyeu (16) de l'amortisseur de torsions (14), l'élément de raccordement (18) présentant une deuxième portion (20) avec un diamètre relativement grand, sur laquelle vient en prise l'arbre de transmission (10) par le biais d'une denture d'entraînement (21).

2. Dispositif selon la revendication 1, **caractérisé en ce que** l'élément de raccordement (18) est un élément réducteur.

3. Dispositif selon la revendication 1 ou 2, **caractérisé en ce que** la deuxième portion (20) de l'élément de raccordement (18) présente une denture interne et l'arbre de transmission (10) présente une denture externe, qui viennent en prise l'une dans l'autre en formant la denture d'entraînement (21).

4. Dispositif selon l'une quelconque des revendications 1 à 3, **caractérisé en ce que** la denture d'entraînement (21) permet une compensation axiale entre le module hybride de la transmission hybride et le moteur à combustion interne.

5. Dispositif selon l'une quelconque des revendications 1 à 4, **caractérisé en ce que** la denture d'entraînement (21) est lubrifiée à l'huile.

6. Dispositif selon l'une quelconque des revendications 1 à 5, **caractérisé en ce que** l'amortisseur de torsions (14), à savoir le moyeu (16) de celui-ci, est serré sur la première portion (19) de l'élément de raccordement (18) par le biais d'un élément de serrage (23).

7. Dispositif selon la revendication 6, **caractérisé en ce que** l'élément de serrage (23) est monté sur le volant d'inertie du moteur à combustion interne par le biais d'un palier (24).

8. Dispositif selon la revendication 5, **caractérisé en ce que** la deuxième portion (20) de l'élément de raccordement (18) est rendue étanche vis-à-vis d'une portion de boîtier (12) par le biais d'un élément d'étanchéité (25).
